# EUROPEAN PATENT APPLICATION

(11) **EP 4 477 550 A1**
(43) Date of publication of application: **18.12.2024**
(21) Application number: 24176029.7
(22) Date of filing: 15.05.2024
(51) Int. Cl.: B64D 27/10, B64D 33/10, F01M 1/02, F01P 5/06, F01P 11/10, B64D 27/08, B64C 27/12, B64C 27/06, B64C 27/82

(54) **HELICOPTER WITH IMPROVED COOLING SYSTEM**

(30) Priority: 30.05.2023 IT 202300010950
(71) Applicant: Lamanna Helicopter S.r.l., 35137 Padova (IT)
(72) Inventor: LAMANNA, ROBERTO, 36040 GRUMOLO DELLE ABBADESSE (VI) (IT)
(74) Representative: Maroscia, Antonio

(57) **Abstract**

A helicopter with an improved cooling system, wherein the helicopter comprises a main rotor **(3)** coupled to an internal combustion engine **(4)** by means of transmission means **(5)** and wherein the cooling system (1) comprises a coolant circuit **(15)** of the engine **(4)** and a lubricating oil circuit. The cooling system **(1)** comprises first liquid cooling means **(15),** second oil cooling means **(16),** a radiator **(22)** and a fan **(17)** housed in an air conveyor **(20)** arranged in an inner compartment of the helicopter. The fan **(17)** is located at the inlet of the air conveyor **(20)** and is not visible from the outside. The cooling system **(1)** comprises a single radiator **(22)** located downstream of the fan **(17).** The first cooling means **(15)** comprise the single radiator **(22),** the second oil cooling means **(16)** comprise a heat exchanger **(40)** separate from the single radiator **(22)** and located below the same, the heat exchanger **(40)** being configured to use as an exchange fluid the coolant exiting the single radiator **(22)** and having a coolant liquid outlet fluidically connected to the engine **(4).**

## Description

### Field of Application

The present invention is generally applicable to the technical field of rotary wing aircraft and is particularly addressed to a helicopter with an improved cooling system.

### Background Art

It is well known that a helicopter must be capable of performing flight activities under widely varying conditions depending on the missions to be performed. For example, the helicopter must be able to operate in vertical flight, in stationary flight and in traverse flight and in all weather conditions, with external temperatures that can vary from a few degrees below zero up to about 40°C.

To this aim, the engine must not only have adequate power but also be equipped with an efficient cooling system to keep the various components and the engine as a whole within temperatures set by the manufacturer. This also applies to the engine oil that circulates and serves to lubricate all moving parts.

Conventional cooling systems provide cooling circuits for both coolant and oil. In order to keep the liquids in these circuits within predetermined temperatures, each of these circuits is normally provided with a radiator whose function is to exchange heat with the outside.

Known cooling circuits are provided with water and oil radiators which are positioned below the engine, towards the bottom of the helicopter, so that they are hit by a flow of air generated by the relative movement of the helicopter with respect to the outside air that may be sufficient to cool the two circuits. When the aircraft is in stationary flight or has to move at low speeds, the relative air flow may not be sufficient and, therefore, it is necessary to forcibly generate this flow. For this purpose, a fan driven by an electric motor is provided for each radiator, which is activated when the temperature of the circuits exceeds a certain threshold detected by appropriate thermal sensors.

In order to drive these electric motors, a large amount of energy is required, which is produced by a current generator that is operatively coupled to the heat engine and which has the drawback of increasing the complexity of the aircraft, as well as depriving the helicopter of part of the energy made available by the engine, reducing the performance and range of the aircraft.

To overcome this drawback, attempts have been made to position both radiators towards the top of the aircraft, near the main rotor and at the outlet of a conveyor in which a continuous flow of air is generated by a fan driven by the same heat engine, without the use of electrically driven fans.

Although this solution solved some of the problems typical of helicopters in the past, it was not free from drawbacks. In fact, the air that is generated by the fan and accelerated in the conveyor is subjected to a rotary motion that does not favour heat exchange with the radiators. In addition, the fluid-dynamic conditions of the swirling flow at a certain speed and flow rate create cavitation and choking or chocking phenomena that severely limit the efficiency of forced convection heat exchange.

A further drawback is that the lubricating oil, in addition to having to be cooled under steady state conditions, has to be heated when the engine is cold in order to circulate smoothly within the engine. The lube circuit radiator makes no contribution to raising the oil temperature, and this slows down the operation of the aircraft.

Another drawback is that the oil circulating in the engine must be collected in a tank to form a lung, which is normally located in an internal compartment of the aircraft at the same height as the engine. When the engine is shut down, the engine cools and the oil is drawn from the engine and fills the crankcase, emptying the oil circuit and delaying engine start-up, especially after periods of long inactivity.

From US2019/0186334 is known an engine assembly having a cooling system comprising two separate radiators, one for cooling the coolant and one for cooling the engine lubricant. Both radiators are positioned upstream of a fan and at the inlet of an exhaust duct in communication with the external environment. The fan is located near the exit of the exhaust duct and is visible from the outside, and is driven by an electric motor that receives energy generated by a generator connected to the engine drive shaft. The disadvantages of this solution are the increased complexity and production costs due to the use of the electric generator, the fan motor and the use of two radiators, all of which are expensive and require accessories and careful maintenance, in addition to a lower energy efficiency.

From CN208534563 is known an aircraft cooling system which comprises an engine oil tank, a first radiator for cooling the engine oil, a second radiator for improving heat dissipation of the oil cooled by the engine coolant. The first radiator is cooled by air, the second radiator is cooled by coolant from the engine, but neither radiator is cooled by a fan. Furthermore, the coolant used to cool the second radiator does not come from a radiator but from the engine. Finally, the system works in such a manner that when the oil temperature is too high, the second radiator uses coolant from the engine and the first radiator continues to run air-cooled, while if the temperature of the lubricating oil is too low, it is increased by the heat given off by the coolant from the engine.

### Technical problem

In view of the background art, the technical problem that the present invention intends to solve is to improve the efficiency of the cooling system of the internal combustion engine by reducing the number of components and avoiding the conversion of mechanical energy into electrical energy and again into mechanical energy for driving the fan.

### Summary of the Invention

The purpose of the present invention is to solve the above-mentioned problem by providing a cooling system having high efficiency at a relatively low cost.

A further purpose is to provide a cooling system for improving heat exchange conditions with the outside.

A further purpose is to realise a cooling system capable of improving the operating conditions of the aircraft even after a long period of inactivity.

A further purpose is to realise a cooling system capable of operating more readily than past systems and to avoid dangerous oil shortages at start-up.

These purposes as well as others that will more clearly apparent hereinafter are achieved by a helicopter with an improved cooling system in accordance with claim 1.

In particular, the helicopter includes a main rotor coupled to an internal combustion engine by transmission means, wherein the engine includes a coolant circuit and a lubricating oil circuit, wherein the cooling system includes first liquid cooling means, second oil cooling means, a fan located in an air conveyor positioned in an interior compartment of the helicopter, and a radiator.

The fan is arranged at the inlet of the air conveyor and is not accessible from the outside, the cooling system comprises a single radiator located downstream of the fan. The first liquid cooling means comprise the single radiator, the second oil cooling means comprise a heat exchanger separate from the single radiator and located below the single radiator. The heat exchanger is configured to use the coolant exiting the single radiator as an exchange fluid and has a coolant outlet fluidically connected to the engine, so as to avoid any electro-ventilated exchange device.

Thanks to this arrangement, the cooling of the liquid is concentrated in the single radiator, which is very effectively invested by the entire flow generated by the fan, while the cooling of the oil is concentrated in the heat exchanger, which uses the coolant cooled in the single radiator as an exchange fluid.

In one embodiment, the conveyor has an elongated body coaxial to the fan and tapered away from the fan. The impeller defines a longitudinal axis and is coupled on one side to the rotor drive means and on the opposite side to a drive shaft for driving a tail rotor, said impeller having a plurality of radial vanes.

The conveyor body has a substantially cylindrical inlet portion peripherally surrounding the impeller, an intermediate portion having a substantially truncated cone shape and an end portion having a cavity defining a passageway for the drive shaft.

Suitably, the intermediate portion has an upper opening in its outer peripheral wall to direct the flow generated by the fan upward. In addition, the radiator has a prismatic shape, and the opening has a peripheral edge that defines a seat with a plan form complementary to that of the radiator to stably house the latter.

Thanks to this configuration, the flow generated by the fan is directed and forced exclusively through the single radiator before being discharged to the outside through an exhaust port of the helicopter.

In one embodiment, the intermediate portion has internally thereof at least one substantially flat deflector flap suitable for straightening the rotational component of the fan-generated flow, making the flow substantially axial and directing it towards the upper opening. Preferably, the deflector flap extends from the inner wall of said intermediate portion in a substantially radial direction towards the fan axis and towards the upper opening and along the entire length of the intermediate body.

This arrangement makes it possible to optimise the flow that laps and flows through the radiator, contributing to a significant increase in the efficiency of this component for the purposes of cooling the coolant circuit.

In one embodiment, the deflector flap has an approximately triangular shape with a radial edge that is substantially parallel to and slightly spaced apart from the trailing edge of the fan blades. Furthermore, the impeller has a front face in fluid communication with at least one air inlet port that may be formed in the outer wall of the helicopter upstream of the main rotor.

This arrangement optimises the efficiency of the fan, which functions, in practice, as the stage of an axial compressor.

In one embodiment, the oil cooling circuit comprises an oil pump in fluid communication with the engine and an oil collection tank interposed between the oil pump and the unique heat exchanger. The heat exchanger comprises a primary circuit passed through by the coolant and a secondary exchange circuit passed through by the lubricating oil.

In one embodiment, the secondary circuit of the heat exchanger includes an inlet pipe for connection to the tank and an outlet pipe for connection to the oil pump, as well as an oil return pipe from the engine to said reservoir.

Additionally, the liquid cooling circuit includes a pressure pump for supplying coolant to the interior of the engine. The cooler includes an inlet pipe for connecting the primary circuit to the liquid pump.

This arrangement has the advantage that the lubricating oil is cooled by the coolant circuit, which, in turn, is cooled by the fan driven by the engine, i.e. by the transmission means between the main rotor and the tail rotor. This solution avoids the use of fans driven by electric motors for the two circuits, which electric fans increase the complexity of the system, take power away from the engine and are also susceptible of malfunction if foreign bodies enter through the openings communicating with the outside.

### Brief Description of Drawings

Further features and advantages of the invention will become more apparent in the light of the detailed description of a preferred but not exclusive embodiment of a helicopter with an improved cooling system, illustrated by way of non-limiting example with the aid of the following drawings in which:
**FIG. 1** is a general view of a partially sectioned helicopter to show the general arrangement of the cooling system according to the invention;
**FIG. 2** is a partially enlarged schematic view of the cooling system according to the invention;

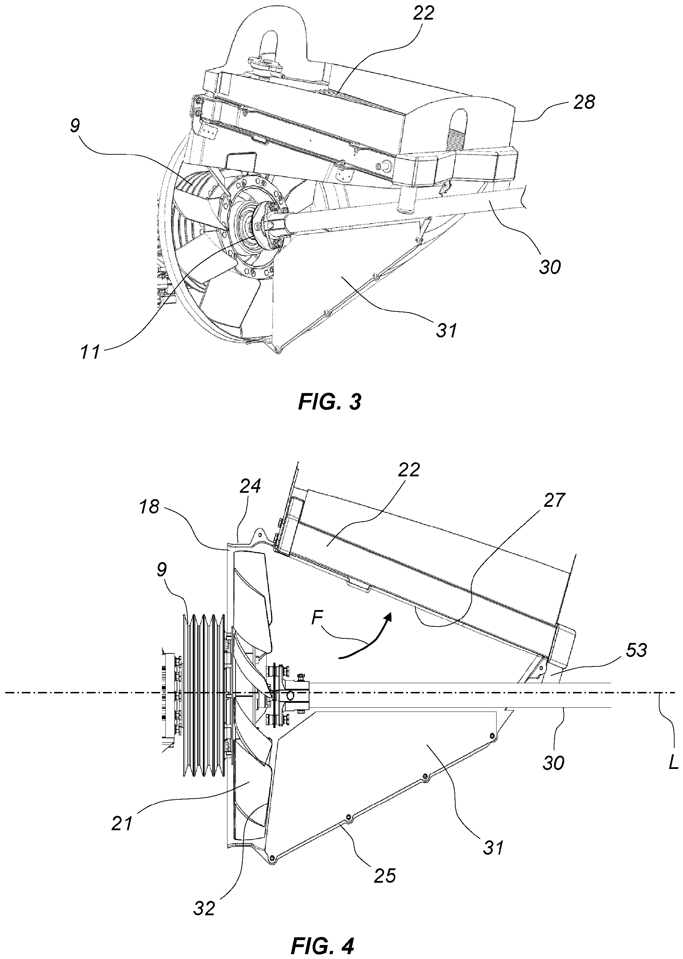

**FIG. 3** is a perspective side view of a detail of the cooling system of **FIG. 2**,
deprived of part of the cover to improve understanding;
**FIG. 4** is a partially sectioned side view of the particular of FIG. 3;
**FIG. 5** is a top view of the detail of FIG. 3;
**FIG. 6** is a front view of the part of FIG. 3.

### Detailed description of a preferred example embodiment

Referring to the appended figures, a helicopter is described, preferably but not exclusively of a light or ultralight type, having an improved cooling system, referred to globally by reference numeral **1.**

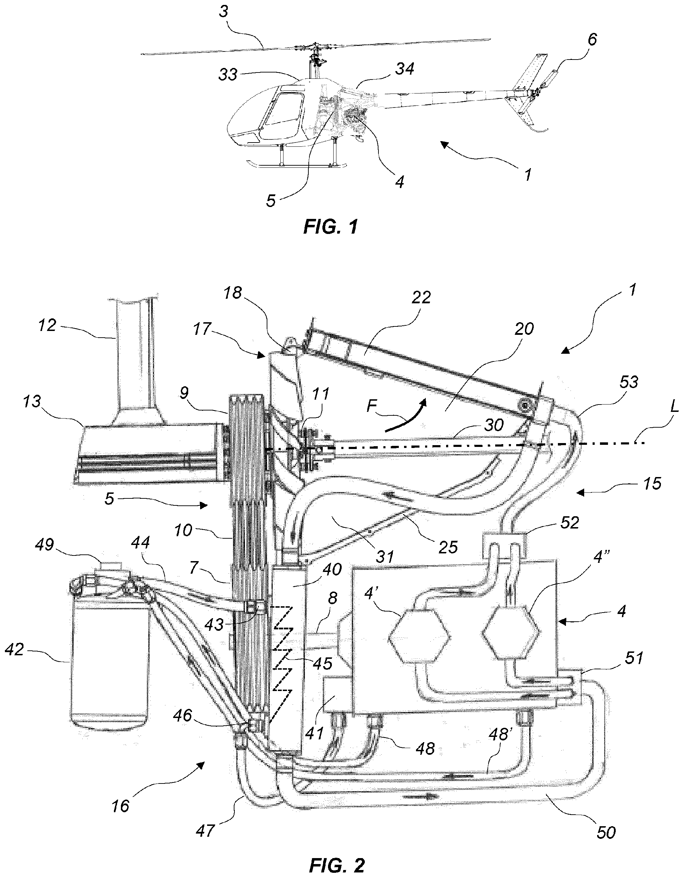

As illustrated in **FIG. 1**, the helicopter on which the cooling system 1 is installed is indicated as a whole by reference numeral **2**, and comprises a main rotor **3** operatively coupled to an engine **4** by means of a transmission **5** which is also used to transmit a rotational movement to the tail rotor **6.**

As best seen in **FIG. 2**, the transmission **5** may comprise a series of drive pulleys **7**, keyed to the motor shaft 8, which transmit motion to a series of driven pulleys **9** via respective belts **10.** The driven pulleys **9** are keyed to a hub **11** which transmits motion to a shaft or mast **12** of the main rotor **3** via a bevel gear contained in a housing **13.**

Typically, the motor **4** comprises a circuit for circulating and cooling a coolant and a circuit for circulating and cooling a lubricating oil.

As further illustrated in **FIG. 2**, the cooling system **1** comprises first liquid cooling means, indicated generically **15** and which will be described in more detail below, and second oil cooling means indicated generically **16**, also described in more detail below.

The first cooling means **15** comprise a fan **17** having a longitudinal axis **L**, placed at the inlet of an air conveyor indicated generically **20** which is positioned in an internal compartment of the helicopter, not visible from the outside, to generate an air flow directed upwards in the direction indicated by the arrow **F.**

The fan **17** is not connected to any electric motor but is dragged in rotation by the same motor **4.** For this purpose, the fan **17** is coupled on one side to the rotor transmission **5** connected to the motor **4** and on the opposite side to a transmission shaft **30** for dragging a tail rotor **6.**

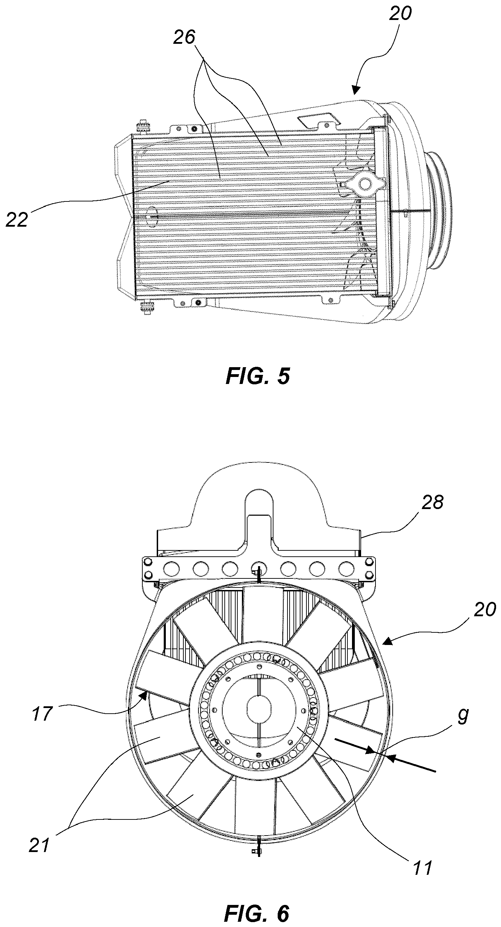

As best seen in **FIG. 6**, the impeller **20** comprises a series of radial vanes **21** of carefully selected geometry to obtain maximum efficiency of the flow generation **F.**

According to the invention, the cooling system **1** comprises a single radiator **22.**

The air flow **F** is directed toward the single radiator **22**, typically formed by a plurality of side-by-side tubes **23**, as best shown in **FIG. 5**, which are lapped by the air flow **F.**

In one embodiment, the air conveyor **20** comprises an inlet section **24**, substantially cylindrical in shape which surrounds the fan **20** and wraps around the top of the vanes **21** with a peripheral clearance g of a few tenths so as to intubate the fan.

The inlet section **24** of the conveyor **20** is joined to an intermediate section **25** of approximately truncated cone shape with decreasing cross-sectional area towards the tail propeller **6** so as to accelerate the flow.

The outer wall of the intermediate section **25** connects to an outlet section **26** with an outlet opening **27** having a peripheral edge **28** to accommodate the radiator **22.**

In one embodiment, the intermediate section **25** has an end opening **29** crossed by a drive shaft **30** coaxial to the axis connecting the transmission hub **11** to the tail rotor.

A peculiar feature of the invention is that the intermediate section **25** of the conveyor **20** has internally thereof at least one substantially flat longitudinal deflector **31** adapted to straightening the rotational component of the flow generated by the fan **17**, making the flow substantially axial and directing it towards the top opening **26.**

The deflector **31** extends longitudinally from the inner wall of the intermediate section **25** in a substantially radial direction towards the fan axis and the upper opening and for the entire axial extension of the intermediate section **25** of the conveyor **20.**

In one embodiment, the deflector **31** has a substantially triangular shape with radial edge **32** close to and slightly spaced apart from the trailing edge of the vanes **21** of the impeller **17.**

Suitably, the inlet section **24** of the conveyor is in fluid communication with an air inlet formed in the outer wall of the helicopter, above and in front of the rotor, generically indicated **33** in **FIG. 1****.**

Similarly, the outlet section **26** of the conveyor **20** with the top opening **27** and the peripheral edge **28** are directed to an upper outlet opening in the outer wall of the helicopter, indicated generically **34** in **FIG. 1****.**

Due to the conformation of the inlet, intermediate and outlet sections of the conveyor **20**, the shape of the fan **17**, and the presence of the deflector **31** in the intermediate section, the flow generated by the fan is strongly accelerated and is mainly conveyed towards the single radiator **22**, concentrating the cooling effect by forced convection of the coolant cooling circuit.

A peculiar aspect of the system is that the second oil cooling means **16** comprise a heat exchanger **40** separate and distinct from the sole radiator **22** and located underneath thereof. In this case, the cooling of the oil takes place by direct heat exchange between two fluids in a liquid state, i.e. the coolant on one side and the oil on the other side.

Indeed, the heat exchanger **40** is configured to use as an exchange fluid the coolant fluid exiting the single radiator **22**, which is already effectively cooled in the first coolant cooling means.

Appropriately, the coolant outlet downstream of the heat exchanger **40** is in fluid communication with the motor **4** to avoid any intermediate electro-ventilated exchange device.

In one embodiment, the second oil cooling means **16** comprise an oil pump **41** in fluid communication with the engine and an oil collection tank **42** interposed between the oil pump **41** and the heat exchanger **40.**

More specifically, the heat exchanger **40** comprises an oil inlet joint **43** connected by a first forward pipe **44** to the tank42 and contains within it a secondary exchange circuit **45**, schematically shown as a discontinuous line.

The exchange circuit **45** is immersed in the primary exchange circuit of the cooling fluid coming from the single radiator **22** after it has been cooled by forced convection by the flow of air generated by the fan **17** and accelerated in the conveyor **20.**

The oil cooled by the heat exchanger **40** flows out of the heat exchanger circuit **45** through an outlet connection **46** which is connected to the oil pump **41** via an outlet pipe **47.**

After entering the engine **4** and lubricating the various parts, the oil is returned to the tank **42** via one, preferably two return lines **48**, **48'.** The **tank42** can be refilled by means of a cap **49** placed on its top and drained with a conventional low drain.

The first liquid cooling means **15** comprise an inlet conduit **50** connecting the primary heat exchanger circuit with a pressure pump **51.** The coolant introduced into the engine **4** flows through the engine heads **4'**, **4"** is collected in the outlet connection **52** which in turn is fluidically connected to the sole radiator **22** via an outlet conduit **53.**

After passing through the only radiator **22**, the coolant is sent to the heat exchanger **40** via the inlet conduit **54** and resumes its cooling cycle described above.

It is noticed that in the embodiment illustrated in **FIG. 2**, the heat exchanger **40** is positioned at the same high as the tank **42** and the engine **4**, unlike some solutions of the past in which both the liquid radiator and the oil radiator were positioned above. Due to the principle of communicating vessels, this arrangement caused a backflow of oil towards the engine crankcase at the time of shutdown, creating a vacuum within the oil circuit.

In this case, the subsequent starting of the engine, especially after a long interruption of operation, may occur under oil-free conditions in the oil circuit with the danger of seizure, and in any case may cause a delay in the proper circulation of oil, resulting in a delay in engine start-up operations.

Thanks to this provision, this danger of emptying the oil tank is also avoided.

From the foregoing, it is apparent that the cooling system achieves its intended purposes and in particular increases the effectiveness of the engine cooling system by avoiding the use of electrically driven fans and improving the circulation of fluids in the engine cooling and lubrication circuits.

The helicopter and the cooling system according to the invention is susceptible to modifications and variations within the inventive concept expressed in the appended claims.

Although the system has been described with particular reference to the appended figures, the reference numerals used in the description and claims are used to enhance the intelligence of the invention and do not constitute any limitation to the claimed scope of protection.

### Industrial Applicability

The present invention is industrially applicable as it can be realised on an industrial scale by industries belonging to the aeronautical and helicopter field.

## Claims

1. A helicopter with an improved cooling system (**1**), wherein the helicopter (**2**) comprises a main rotor (**3**) coupled to an internal combustion engine (**4**) by transmission means (**5**), the engine (**4**) comprising a coolant circuit and a lubricating oil circuit, wherein the cooling system **(**1) comprises first liquid cooling means (**15**), second oil cooling means (**16**), a radiator (**22**) and a fan (**17**) housed in an air conveyor (**20**) arranged in an inner compartment of the helicopter, **characterised in that** said fan (**17**) is located at the inlet of said air conveyor (**20**) and is not visible from the outside, said cooling system (**1**) comprising a single radiator (**22**) placed downstream of said fan (**17**), said first liquid cooling means (**15**) comprising said single radiator (**22**), said second oil cooling means (**16**) comprising a heat exchanger (**40**) separated from said single radiator (**22**) and arranged downstream of said single radiator (**22**), said heat exchanger (**40**) being configured to use as an exchange fluid the coolant liquid leaving said single radiator (**22**) and having an outlet of the cooling liquid fluidically connected to the engine (**4**).

2. Helicopter according to claim 1, **characterised in that** said conveyor (**20**) has an elongated body coaxial to said fan (**17**) and tapered on the opposite side to said fan.

3. Helicopter according to claim 1, **characterised in that** said impeller (**17**) comprises a series of radial vanes (**21**) defining a longitudinal axis (**L**) and is driven in rotation by the internal combustion engine (**4**) so as to avoid any electric motor, said impeller (**17**) being coupled on one side to the transmission of the main rotor (**3**) and on the opposite side to a transmission shaft (**30**) for driving a tail rotor (**6**).

4. Helicopter according to claim 2, **characterised in that** said conveyor (**20**) has an inlet section (**24**) substantially cylindrical shaped to peripherally enclose said impeller (**17**) and an intermediate section (**25**) of substantially truncated conical shape coaxial to said impeller (**17**), said intermediate section (**25**) having in its outer peripheral wall an upper outlet opening (**26**) defining an outlet section (**27**) suitable to convey upwards the flow (**F**) generated by said impeller (**17**).

5. Helicopter according to claim 4, **characterised in that** said upper outlet opening (**26**) has a peripheral edge (**28**) defining a seat suitable for housing said single radiator (**22**) and conveying the air flow through said single radiator (**22**) before discharging it outside through an outlet opening (**34**) of the helicopter, placed superiorly and posteriorly to the main rotor (**3**).

6. Helicopter according to claim 4, **characterised in that** said intermediate section (**25**) has internally thereof at least one substantially flat longitudinal deflector (**31**) lying in a plane passing through said longitudinal axis (L) capable of straightening the roundabout component of the flow generated by said fan (**17**), making the flow substantially axial and directing it towards said upper exhaust port (**26**).

7. Helicopter according to claim 6, **characterised in that** said deflector (**31**) extends from the inner wall of said intermediate portion (**25**) in a substantially radial direction for the entire extension of said intermediate body (**25**) and has a radial edge (**32**) close to and slightly distanced from the trailing edge of the radial vanes (**21**) of said impeller (**17**).

8. Helicopter according to claim 1, **characterised in that** said oil cooling means (**16**) comprise an oil pump (**41**) in fluid communication with said internal combustion engine (**4**) and an oil collection tank (**42**) interposed between said oil pump (**41**) and said heat exchanger (**40**).

9. Helicopter according to claim 8, **characterised in that** said heat exchanger (**40**) comprises a primary exchange circuit traversed by the coolant and a secondary exchange circuit (**45**) traversed by the lubricating oil, said secondary circuit (**45**) of said heat exchanger (**40**) having an inlet pipe (**44**) for connection to said tank (**42**), an outlet pipe (**47**) for connection to said oil pump (**41**), and at least one return pipe (**47**, **48**) of lubricating oil from said internal combustion engine (**4**) to said tank (**42**).

10. Helicopter according to claim 9, **characterised in that** said primary liquid cooling means (**15**) comprise a pressure pump (**51**) for circulating coolant within said internal combustion engine (**4**), said heat exchanger (**40**) having an inlet conduit (**50**) for connecting said primary liquid cooling circuit to said liquid pump (**51**).
